# EUROPEAN PATENT APPLICATION

(11) **EP 2 528 019 A1**
(43) Date of publication of application: **28.11.2012**
(21) Application number: 11167654.0
(22) Date of filing: 26.05.2011
(51) Int. Cl.: G06K 9/62, G06T 7/00

(54) **Apparatus and method for detecting objects in moving images**

(71) Applicant: Axis AB, 223 69 Lund (SE)
(72) Inventor: Almbladh, Johan, SE-222 21 Lund (SE); Netzell, Karl, SE-227 36 Lund (SE)
(74) Representative: Åkesson, Sten Jan-Åke

(57) **Abstract**

The present invention relates to an object detector and a method for detecting objects in moving images. The method comprises i) receiving video including a sequence of image frames. Further the method comprises ii) performing a first type of window based object detection on substantially an entire image frame captured once every t₁ seconds. The first type of window based object detection includes positioning a plurality of search windows within the image frame, which in combination cover substantially the entire image frame, the distance between two neighbouring search windows being Δxₛ₁ in a first direction within the image frame, determining if an object is present in a search window by comparing data representing the area of the image frame being defined by said search window with a model based on features representing an object to detect, and setting a detection boundary enclosing a subarea of the image frame including a search window in which an object has been detected. The method further comprises iii) performing a second type of window based object detection in an image frame captured after the capturing of an image frame in which an object has been detected. The second type of window based object detection includes positioning a plurality of search windows only within said detection boundary in the image frame captured after the capturing of an image frame in which an object has been detected, the distance between two neighbouring search windows being Δxₛ₂ in a first direction within the image frame, Δxₛ₂ is smaller than Δxₛ₁, and determining if an object is present in a search window by comparing data representing the area of the image frame being defined by said search window with a model representing an object to detect.

## Description

### Technical field of the invention

The present invention relates to the field of object detection in moving images and in particular to a method and an apparatus for detecting objects in moving images.

### Background of the invention

Computer systems arranged to detect objects in digital images, e.g. still images, photographs, image frames from video, etc., have been developed for some time. Many different approaches to object detection have been proposed and many of them are used in products on the market today. Most of the known object detection methods are very good and are able to detect or find most or all objects of interest in an image given enough time. However, it is particularly the time that may be a problem when detecting objects in moving images and it may be an even greater problem when detecting objects in real time moving images, e.g. live images. If a detection process operates too slowly, i.e. the processing of an image frame takes too long time, then potentially important detections may be missed because the image data of these important events is found in image frames that have to be discarded from an object detection point of view in order to provide image detection for one image frame.

This problem is at least partly discussed in US patent No. 7 099 510, by Jones et al., in which it is described that the object detection process of the prior art is relatively slow. Moreover, according to US 7 099 510 the speed of the detection process is increased for example by introducing an image representation called integral image, by using a feature representation which detects object by looking for the appearance of features, which in their description have basic geometric shapes, and by providing a faster classification function using a cascaded approach.

### Summary of the invention

One object of the present invention is to increase the performance of the process of detecting objects.

The object is achieved by means of a method according to claim 1 and by means of an object detector according to claim 10. Further embodiments of the invention are presented in the dependent claims. In particular, according to one aspect of the invention, a method for detecting objects in moving images, comprises:
A) receiving video including a sequence of image frames,
B) performing a first type of window based object detection on substantially an entire image frame captured once every t₁ seconds, said first type of window based object detection including:
   positioning a plurality of search windows within the image frame, which in combination cover substantially the entire image frame, the distance between two neighbouring search windows being Δxₛ₁ in a first direction within the image frame,
   determining if an object is present in a search window by comparing data representing the area of the image frame being defined by said search window with a model based on features representing an object to detect, and
   setting a detection boundary enclosing a subarea of the image frame including a search window in which an object has been detected,
C) performing a second type of window based object detection in an image frame captured after the capturing of an image frame in which an object has been detected, said second type of window based object detection including:
   positioning a plurality of search windows only within said detection boundary in the image frame captured after the capturing of an image frame in which an object has been detected, the distance between two neighbouring search windows being Δxₛ₂ in a first direction within the image frame, Δxₛ₂ is smaller than Δxₛ₁, and
determining if an object is present in a search window by comparing data representing the area of the image frame being defined by said search window with a model representing an object to detect.

Using this method an advantage relating to decreasing the time it takes to perform each object detection is achieved. This advantage is achieved as a result of the combination of the features of using two types of window based object detections wherein one is performed over an entire image frame using a less dense search window spacing and the other is enabled to use the result from the previous object detection in order to perform the object detection over a limited area of a later captured image frame and using a more dense search window spacing.

In one embodiment of the invention the performing of a second type of window search based object detection further includes resetting a detection boundary to a detection boundary enclosing a sub area of the image frame including a search window in which an object has been detected by the second type of window search based object detection, and wherein the method further comprises performing an additional second type of window search based object detection in an image frame captured later than the image frame of the previously performed second type of window search based object detection and using the reset detection boundary. In this way the full image frame object detections may be performed less frequently and still enable utilisation of the latest object detection result in further object detection/tracking of the object previously detected.

According to one embodiment the data representing the area of the search window is the image data of said area.

According to another embodiment the data representing the area of the search window is the image data of said area from an integral image of the captured image. This feature even further decreases the time required by each performance of an object detecting process.

According to yet another embodiment said model is based on features of the object to detect. This is advantageous in that a less data intensive model may be used in detecting objects where the specific appearance between different scenes of different objects may vary, i.e. it results in a robust method using small amount of data.

According to a further embodiment said comparing data representing the area of the search window with a model including said features in a scheme of cascading classifiers which also may contribute to a faster detecting process.

According to another embodiment said comparing data representing the area of the search window with a model being an image. The advantage of using an image, or a plurality of images, is that they are easy to produce.

According to one embodiment Δxₛ₁ is at least half the width of the width of the search windows and according to another embodiment Δxₛ₁ is at least twice as large as Axₛ₂.

According to another aspect of the invention an object detecting apparatus comprises:
an image frame data input arranged to receive a representation of an image frame being part of a video sequence,
a search window controller arranged to position a plurality of search windows within the image frame,
a classifying means arranged to process image data within a search window by comparing it to data of a classification model and thereby decide whether a search window includes an object or not, and
a detection boundary generator arranged to generate a detection boundary based on the size and position of a search window classified as including an object, wherein the detection boundary is larger than the search window classified as including an object but smaller than the image frame,
wherein said search window controller being arranged to position during a first type of window based object detection a plurality of search windows within the image frame, which in combination cover substantially the entire image frame, and to position during a second type of window based object detection a plurality of search windows only within a detection boundary, wherein the distance between two neighbouring search windows during the first type of window based object detection is Δxₛ₁ in a first direction within the image frame and wherein the distance between two neighbouring search windows during the second type of window based object detection is Δxₛ₂ in a first direction within the image frame, Δxₛ₂ being smaller than Δxₛ₁.

By implementing an object detector like this an advantage relating to decreasing the time it takes to perform each object detection is achieved. This advantage is achieved as a result of the combination of the features of using two types of window based object detection wherein one is performed over an entire image frame using a less dense search window spacing and the other is enabled to use the result from the previous object detection in order to perform the object detection over a limited area of a later captured image frame and using a more dense search window spacing.

According to a further embodiment the image frame data input is arranged to receive an integral image of a captured image, which also results in time savings in an object detection process.

According to another embodiment the object detector further comprises an image integrator arranged to integrate image data received via the image frame data input, which also results in time savings in a object detection process.

According to yet another embodiment the classifying means is arranged to operate on models based on cascading classifiers for further reduction of the time of the object detection processing.

According to one embodiment the object detecting apparatus further comprises a register for registering detected objects.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the word "comprising" does not exclude other elements or steps.

### Brief description of the drawings

Other features and advantages of the present invention will become apparent from the following detailed description of a presently preferred embodiment, with reference to the accompanying drawings, in which
Fig 1 is a schematic block diagram showing a converter of analog video to digital video implementing one embodiment of the invention,
Fig 2 is a schematic block diagram of an embodiment of the object detector connected to an image processing unit,
Fig 3 is a schematic block diagram showing a video camera implementing one embodiment of the invention,
Fig 4 is a schematic block diagram showing a video analyzing device implementing one embodiment of the invention,
Fig 5 is a timing diagram showing a temporal relation between captured/received image frames, object detection according to a first type, and object detection according to a second type in accordance with one embodiment of the invention,
Figs 6a-d schematically show an arrangement of search windows used in an object detection of type 1 in accordance with one embodiment of the invention,
Figs 7a-d schematically show an arrangement of search windows used in an object detection of type 2 in accordance with one embodiment of the invention,
Fig 8 is a flowchart showing the object detecting process according to one embodiment of the invention,
Fig 9a-b is a flowchart showing one embodiment of a process of the first type of window based object detection used in the object detection process of Fig 8, and
Fig 10a-b is a flowchart showing one embodiment of a process of the second type of window based object detection used in the object detection process of Fig 8.

Moreover, in the figures like reference characters designate like or corresponding features or parts throughout the several figures.

### Detailed description of embodiments

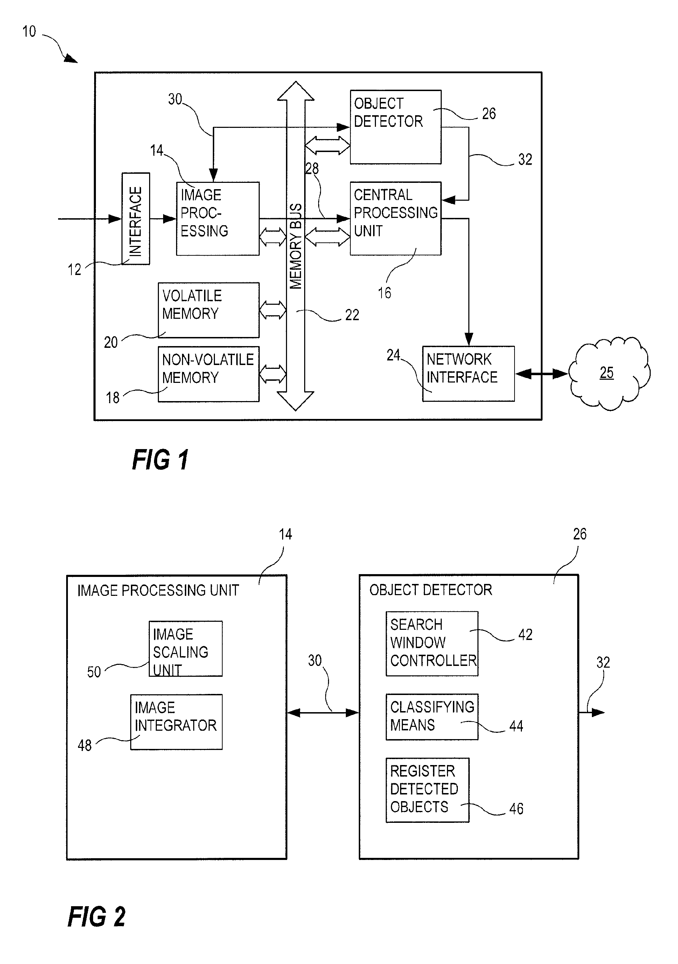

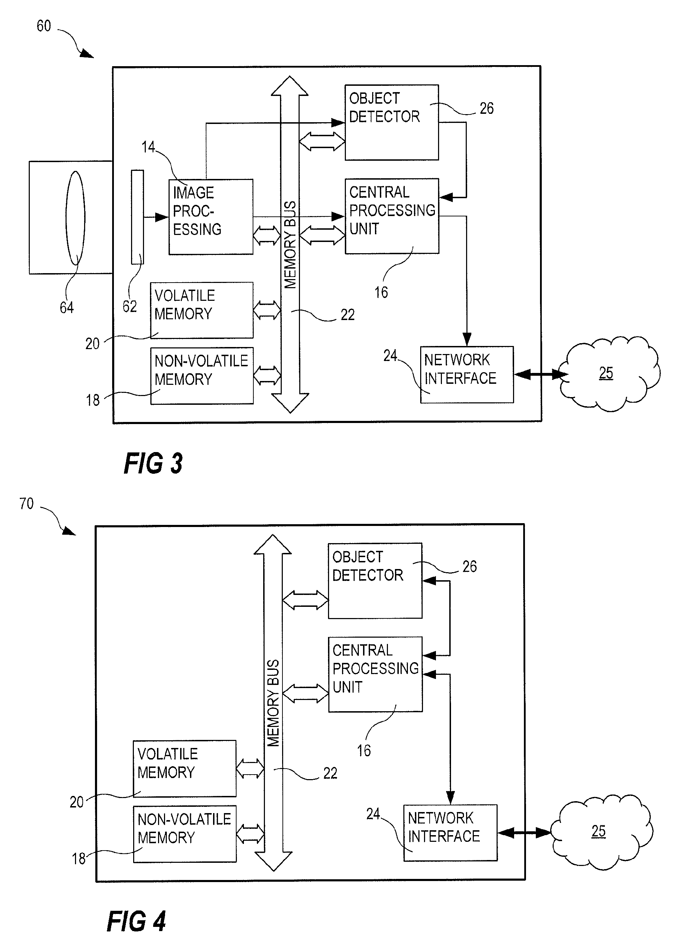

According to one embodiment the invention is implemented in a video processing device. Examples of such devices are converters of analog video to digital video, see Fig 1, video cameras, see Fig 3, and video analyzing devices receiving a digital video stream processing it and presenting a result on a network or in the device itself, see Fig 4.

In the present application the word "video" is intended to represent a sequence of image frames representing a scene or scenes in motion.

In Fig 1 an example of a converter 10 of analog video to digital video is schematically depicted. Such a converter 10 may for instance be a video encoder, a video server, etc. This converter 10 includes an interface 12 for receipt of analog video, an image processing unit 14 for converting the analog video into suitable format or formats, a central processing unit 16 for general processing and control of the functionality of the converter 10, a non-volatile memory 18 and a volatile memory 20 for long term and short term storage of data, respectively, a memory bus 22 connecting the memories 18, 20, to the devices requiring access to memory, a network interface 24 enabling connection of the converter 10 to a communication network 25, e.g. a Local Area Network, LAN, a Wide Area Network, WAN, the Internet, etc., via wired or wireless communication, and an object detector 26 arranged to detect objects in the scene or scenes represented by the video.

The object detector 26 may be implemented in hardware, e.g. by means of logic circuitry, an Application Specific Integrated Circuit (ASIC), a Field Programmable Gate Array (FPGA), etc., or in software processed by a central processing unit 16.

The object detector 26 may be arranged to work on the same video as provided to the central processing unit 16, i.e. the communication paths 28 and 30 transport identical video. However, according to another embodiment, the image processing device 14 provides a version of the video to the object detector 26 via communication path 30 that is differently processed than the video provided via communication path 28 to the central processing device. The output 32 from the object detector 26 is at least identifying the position of an identified object within the scene.

According to one embodiment of the object detector 26, see Fig 2, the object detector 26 includes a search window controller 42 arranged to control the positioning of search windows within an image frame presently processed, a classifying means 44 arranged to process image data within a search window by comparing it to data of a classification model and thereby decide whether a search window includes an object or not, and a register for detected objects 46 arranged to keep track of objects detected. The register for detected object may store data of the register in the volatile memory 20 or the non-volatile memory 18 for use in another stage of the object detection process. These functions are described in more detail below in connection to the process of the object detector 26.

Further, according to one embodiment the process of the object detector 26 requires image frames encoded in a specific manner and differently scaled versions of an image frame. The processing required to generate image frames like this may be performed in the object detector 26 itself, in a central processing unit 16, or in the image processing unit 14 as showed in Fig 2. Therefore the image processing unit may include an image integrator 48, and an image scaling unit 50. The more detailed description of the functionality of the image integrator 48 and the image scaling unit 50 will be presented below.

As briefly mentioned above, the video processing device alternatively may be a video camera 60, see Fig 3. When considering the functionality relating to object detection, the video camera 60 includes essentially the same means as the converter 10 of Fig 1. The differences from the converter 10 which are showed in Fig 3 are that the video camera 60 includes an image sensor 62 and a lens 64 focusing the light of the scene to capture onto the image sensor 62. Hence, the image frames to be processed at the image processing unit 14 originates from the image sensor 62 of the camera 60. In other respects the video camera 60 may include the features described above in connection with Fig 1.

Moreover, the third example briefly mentioned above is a video analyzing device 70, see Fig 4. The video analyzing device 70 would receive image frames of the video to perform object detection on from the network 25 via the network interface 24. The video data is then prepared for object detection in the central processing unit 16 before it is processed by the object detector 26. The video analyzing device 70 may include an image processing unit 14 as well. Then the object detection and the output from the object detector may be identical to the object detection used for the other video processing devices.

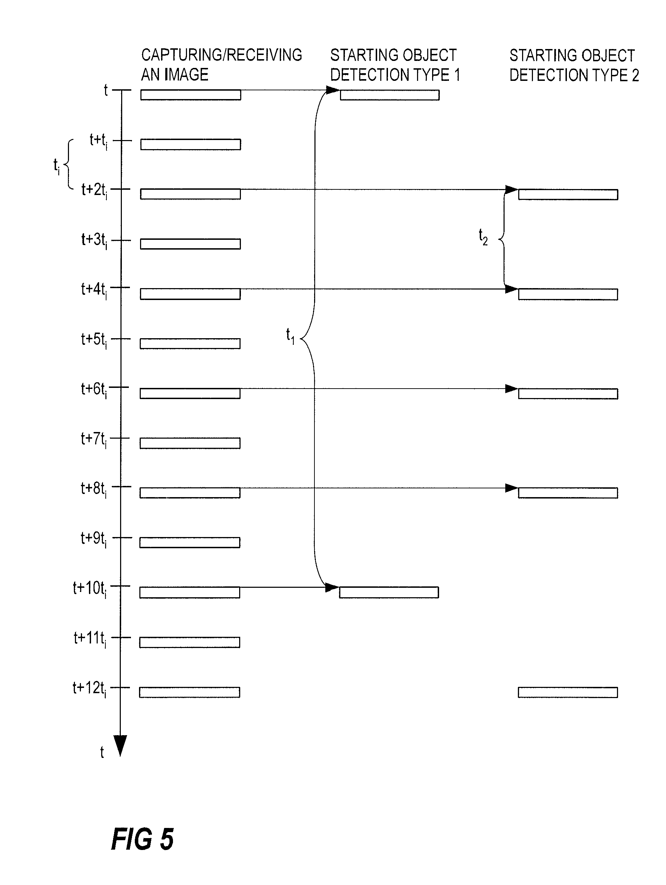

Now referring to the timing diagram of Fig 5, the object detection process of the invention is based on performing at least two types of window based object detections, referred to as object detection type 1 and object detection type 2, respectively. The figure shows one possible timing diagram when the invention is implemented according to one embodiment of the invention. Moreover, the figure shows image frames of the video being captured or received frequently at specific time intervals. The time tᵢ between two images may also be expressed as one divided by the frame rate of the video, tᵢ= 1/(video frame rate). At time t an object detection of type 1 is started using the image frame of time t. The object detection of type 1 may be seen as a quick scan of an entire image frame in order to find areas of interest, described in more detail below.

Then a couple of frames later, at t+2tᵢ, an object detection of type 2 is started using the image frame of time t+2tᵢ. The object detection of type 2 is a more focused object detection process in which the detection process is focused in areas likely to include objects based on the object detection of type 1. Observe that the object detection at time t+2tᵢ is performed on another image than the object detection performed at time t.

The performing of object detection at t+2tᵢ in Fig 5 is followed by performing yet another object detection of type 2 at t+4tᵢ. Accordingly, one focused object detection is followed by another focused object detection. According to one embodiment this object detection of type 2 following another object detection of type 2 is focused in areas likely to include objects based on the previous object detection of type 2.

The object detections of type 2 do not have to be repeated for every single image frame but may be repeated every second image frame, as depicted in Fig 5, or at any other rate suitable for the environment in which the object detector is to be used. ln the figure the time between the start of two consecutive object detections of type 2 is t₂ seconds.

The time period between performing two consecutive object detections of type 1 is referred to as t₁ in Fig 5. The object detections of type 1 may be performed more seldom than the object detections of type 2, i.e. t₁> t₂. By performing the object detections in this way it becomes possible to achieve time efficient object detection in that an substantially full detection of the entire image frame is performed rarely and may be used as an input to a less extensive object detection being limited to a substantially smaller area. This less extensive second type object detection may be more sensitive or operating in deeper details and still require less time to achieve result. Such effect is achieved because a less extensive area of the image frame has to be processed.

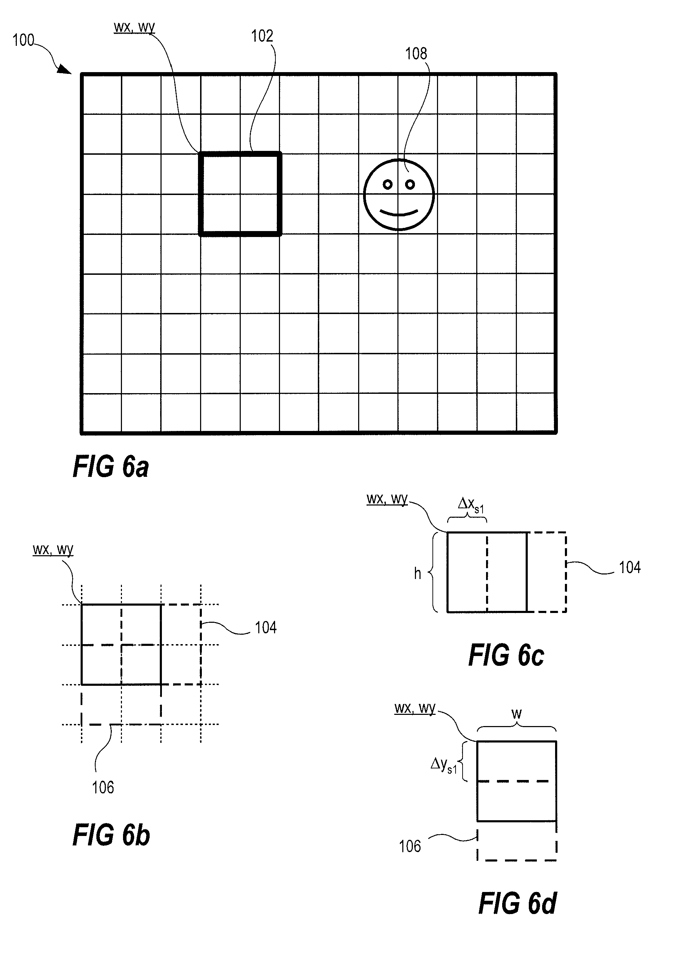

According to one embodiment the object detection of type 1 is a window based object detection scheme, see Figs 6a-d. The type 1 object detection operates on substantially the entire image frame 100 by positioning search windows 102 covering substantially the entire image frame 100, see Fig 6a. The window 102 indicates a search window and its boundary. The grid depicted in the image frame of the figure represents the rest of the search windows, visualizing the fact that the search windows cover substantially the entire image frame. Throughout the description of the present application the position of the search window 102 is defined as the coordinates of the top left corner wx, wy, of the search window 102.

In the example of Fig 6a-d the search windows 102 are positioned so that the distance Δxₛ₁ between a search window 102 and the position of the closest neighboring search window 104in an x-direction is half the width w of a search window, Δxₛ₁=w/2, and so that the distance Δyₛ₁ between the search window and the position of the closest neighboring search window 106 in an y-direction is half the height h of a search window 102, Δyₛ₁=h/2. These distances Δxₛ₁ and Δyₛ₁ are only exemplary distances and may be set to a range of values.

Moreover a face 108 is depicted in Fig 6a indicating a position in the image frame where the type 1 object detection would detect an object if the object to be detected would be faces.

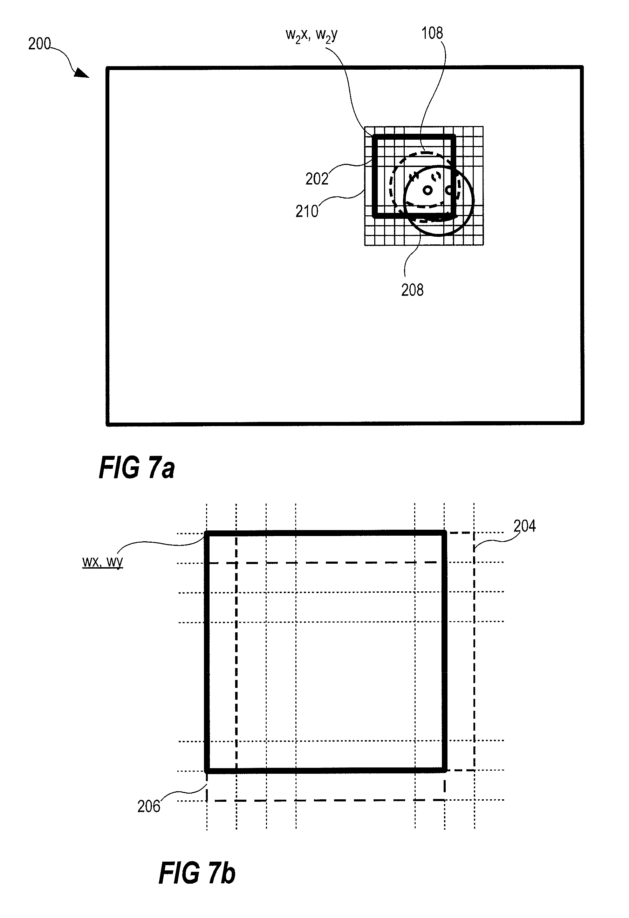

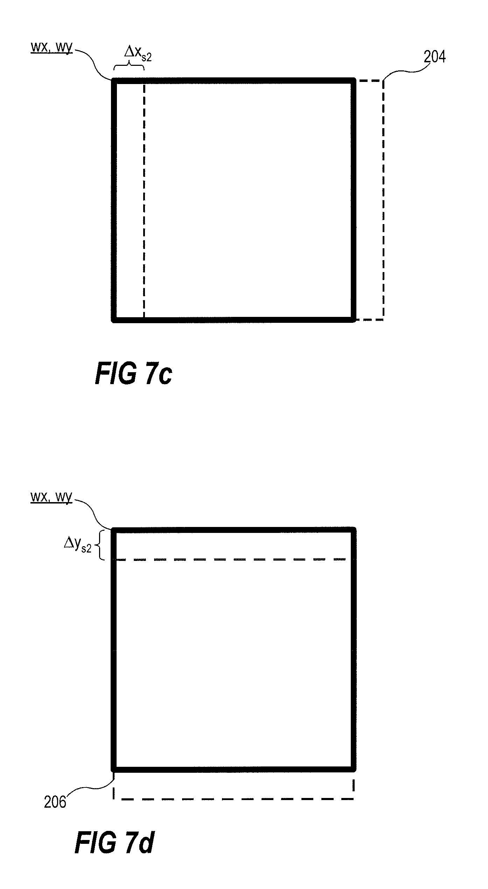

The type 2 object detection operation being performed in between two type 1 object detection operations is performed on another image frame 200 than the image frame 100 of a previous object detection operation, independent of whether it where a type 1 or type 2 object detection operation. The type 2 object detection operation is just like the type 1 object detection operation a search window based object detection scheme. Fig 7a-d depicts one embodiment of the positioning or arrangement of the search window in a type 2 object detection following another object detection, e.g. the type 1 object detection of Fig 6a. The position of the face 108 from the image frame of Fig 6a is inserted in Fig 7a using broken lines in order to indicate the position of the face within a previous image frame. The present position of the face 208 in the image frame to analyse is indicated by the face drawn using a continuous line. As indicated by the difference in position of the face from the previous object detection and the object detection to be performed on the image frame of Fig 7a the object to be detected may move, i.e. change position, from one image frame to another. When starting type 2 object detection at least one object must have been detected during a previous object detection operation.

The position of the object in the earlier search is then used to define a limited detection boundary 210 or search area within the present image frame 200. The detection boundary 210 should be large enough to capture an object, e.g. the face 208, at a new position and small enough to enable more efficient operation of the type 2 object detection. During the type 2 object detection operation search windows 202 is then positioned within the detection boundary 210 at different positions w₂x, w₂y. Throughout the description of the present application the position of the search window 202 is defined as the coordinates of the top left corner w₂x, w₂y, of the search window 202.

The search windows 202 may be positioned so that the distance Δxₛ₂ between a search window 202 and the position of the closest neighboring search window 204in an x-direction is at least half the distance of the type 1 object detection search window distance Δxₛ₁, i.e. Δxₛ₂ ≤ Δxₛ₁/2, and so that the distance Δyₛ₂ between the search window 202 and the position of the closest neighboring search window 206 in an y-direction is at least half the distance of the type 1 object detection search window distance Δyₛ₁,i.e. Δyₛ₂≤ Δyₛ₁/2. These distances Δxₛ₂ and Δyₛ₂ are only exemplary distances and may be set to a range of values apart from the ones presented above. For example, in Figs 7a-d the distances Δxₛ₂= Δxₛ₁/8 and Δyₛ₂=Δyₛ₁/8.

Accordingly, the object detection method operates using two different object detection schemes which are performed at different image frames from a video sequence. The type 1 object detection scheme positioning search windows 102 sparsely for achieving high speed processing of substantially the entire image frame 100 and still be able to indicate possible objects of interest 108. The type 1 object detection is repeated periodically at a low frequency in relation to the frequency of the type 2 object detection scheme. The type 2 object detection scheme utilises information from at least one previous object detection in order to define a detection boundary 210 within which the type 2 object detection scheme then perform a more dense positioning of search windows 202 and is thereby achieving higher quality detection. Because the detection boundary 210 defines a relatively smaller search area the speed of this type 2 object detection scheme may be quite high, i.e. the processing time may be short.

In addition to the positioning of search windows 102; 202, as described above, each one of the detection schemes includes an area limited detection process performed on the data representing the image frame in the area of the search window 102; 202. The area limited detection process may be any known detection process. According to one embodiment the area of the search window 102; 202; may be compared with one or a plurality of images or patterns representing the object to detect. According to another embodiment the area of the search window 102; 202; may be evaluated using features representing the objects to detect or cascading features representing the object. A possible search window detection or evaluation process are presented in "Rapid Object Detection using a Boosted Cascade of Simple Features", by Paul Viola and Michael Jones, published during "ACCEPTED CONFERENCE ON COMPUTER VISION AND PATTERN RECOGNITION 2001" and in US patent No. 7 099 510 B2. Another process for detection or evaluation of the search windows is presented in "A Statistical Method for 3D Object Detection Applied to Faces and Cars", by Henry Schneiderman and Takeo Kanade at Robotics Institute, Carnegie MellonUniversity, Pittsburgh, PA 15213, *"http:*/*lwww.robots. ox. ac.ukl~cvrg*/*trinity2003*/ *schneiderman_cvpr00.pdf'.*

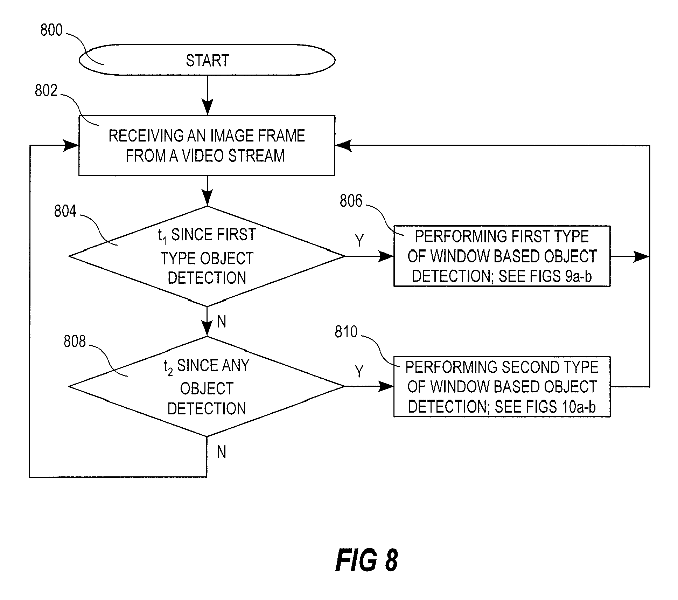

Now referring to Fig 8, according to one specific embodiment of the invention the process 800 of detecting objects in moving images includes receiving an image frame from a video stream, step 802. Depending on the type of device the object detector is implemented in the images may be received from an image sensor if the device is a video camera, from an interface for receipt of analog video if the device is a converter of analog video to digital video, or from a network interface if the device is a networked video analyzing device.

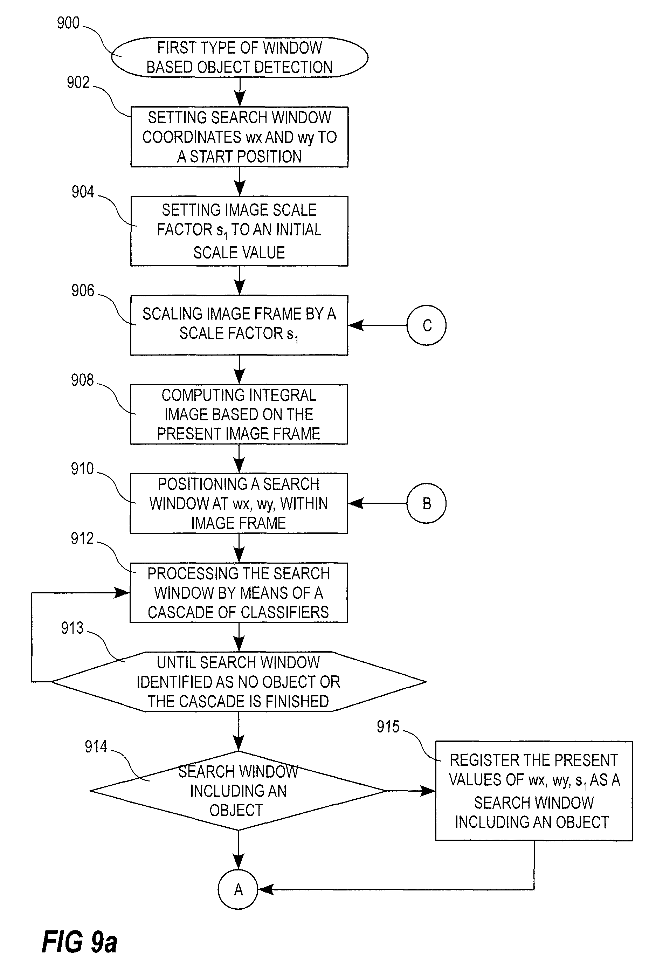

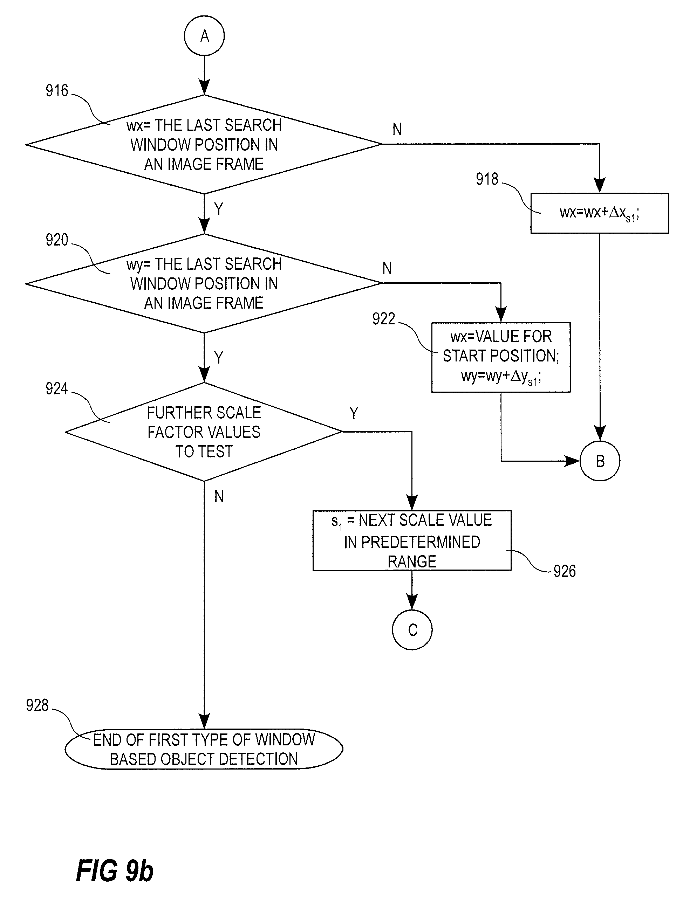

Then the process check if it is time for a first type object detection, step 804. This may be checked by having a timer set to t₁ and having it running from the latest point in time when the first type object detection was started and to determine that the period has expired when the timer has expired. If the time t₁ has expired then the process continues by performing a first type of window based object detection on the present image frame, step 806. The first type of window based object detection, also referred to as the type 1 object detection scheme, is described in Figs 9a-b. Then when the first type of window based object detection is finished the process returns to step 802 receiving another image. Depending on the duration of the object detection the image frame received when the object detection process is finished is not necessary the image frame immediately following the one just processed.

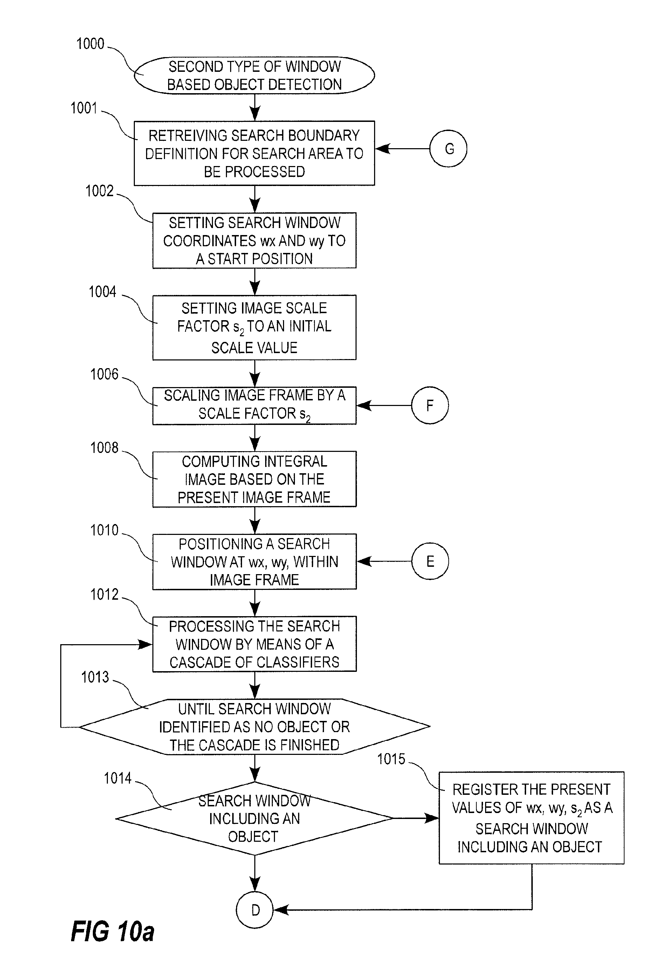

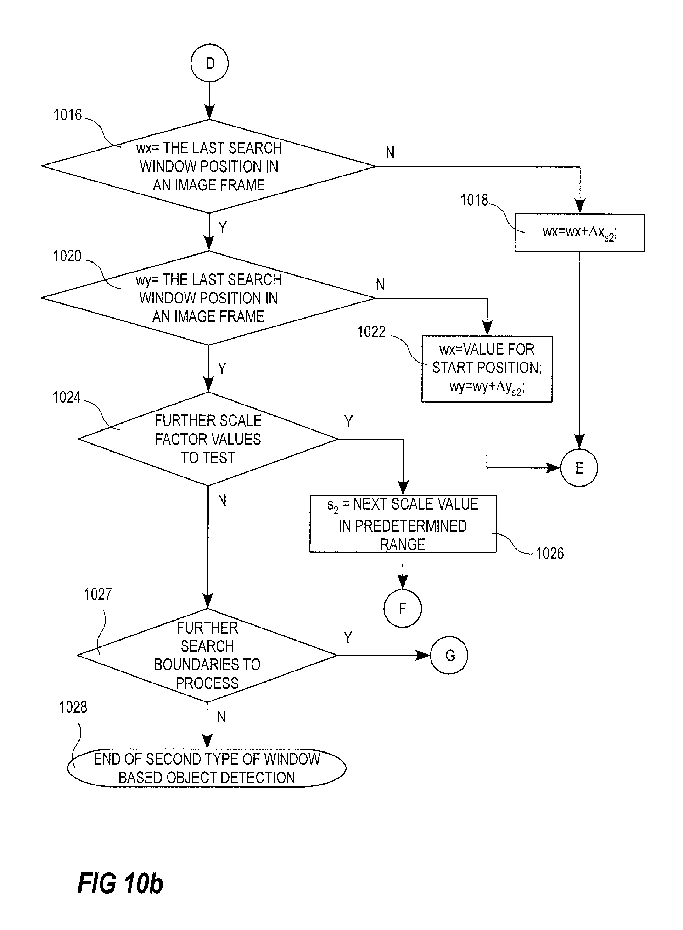

If the time t₁ has not expired, then the process check if it is time for a second type object detection, step 808. This may be checked by having a timer set to t₂ and having it run from the latest point in time when the second object detection was started and to determine that the period has expired when the timer has expired. If the time t₂ has expired then the process continues by performing a second type of window based object detection on the present image frame, step 810. The second type of window based object detection, also referred to as the type 2 object detection scheme, is described in Figs 10a-b. Then when the second type of window based object detection is finished the process returns to step 802 receiving another image. Depending on the duration of the object detection the image frame received when the object detection process is finished is not necessary the image frame immediately following the one just processed.

If none of the timers timing the t₁ period or the t₂ period has expired then the process returns to step 802 receiving yet another image.

Now referring to Figs 9a-b, one embodiment of the first type of window based object detection 900, which corresponds to step 806 in Fig 8, is described. This process 900 starts by setting or resetting the object detection scheme. This may be performed by setting initial search window coordinates wx, wy, to representing a start position for the search window within the present image frame, step 902. The start coordinates wx, wy may for instance be 0, 0, which may define the upper left corner in the present image frame. A further initial setting may be to set an image scale factor s₁ to an initial scale value, step 904. Then the image frame is scaled using the scale factor s₁, step 906, and an integral image is computed based on the scaled image of the present image frame, 908. In an integral image, also known as summed area table, the value at any point in the summed area table is the sum of all the pixels above and to the left of the point. A more detailed description of the integral image may be found in "Summed-area tables for texture mapping", by Crow, Franklin, 1984. SIGGRAPH '84: Proceedings of the 11th annual conference on Computer graphics and interactive techniques. pp. 207-212, and one possible way to use it in object detection schemes is described in US patent No. 7 099 510 B2.

A search window is positioned at wx, wy, in the image frame, step 910, and the area of the search window is processed by means of, for example, a cascading classifier method in accordance with the previously mentioned method of Paul Viola and Michael Jones, step 912. The search window processing of step 912 is repeated until the search window is identified as not including an object or until the cascading classifier method has finished, step 913. The processing of the search window may alternatively be performed using any other method known to the person skilled in the art or previously mentioned in this specification.

If the processing of the search window, step 912, returns the result that the search window is likely to include an object, step 914, then the presently used search window position, wx, wy, and scale factor s₁ is registered as at least part of the result of the first type of search window based object detection, step 915. Then the process continues to step 916. If the processing of the search window presents that the search window does not include an object to be detected, the process continues directly to step 916.

In steps 916, 918, 920, and 922 the search window is moved and then the process is returned to step 910 in order to start a new search window processing at the new search window position. The process of moving the search window according to the depicted process includes checking if the present position is the last window in an x-direction, step 916. If this is false then the x-position wx is incremented by a distance value Δxₛ₁, step 918, and the process returns to step 910 in order to process the new search window position. However, if the search window position is the last window position in an x-direction, step 916, then the process continues to step 920 to check if the present search window position represents the last row of search windows, i.e. is the last window in a y-direction. If this statement is false the search window is to restart at the beginning of a new row, i.e. wx is set to the value for a start position and wy is incremented by a distance value Δyₛ₁, step 922. For example wx=0 and wy=wy+ Δyₛ₁.

If the last search window has been processed the process continues to step 924 in which a check of whether all intended different scale factors has been applied to the image frame. If not all the different scale factors have been applied to the image frame then the scale factor s₁ is set to the next scale value in the predetermined range of scale factors, step 926, and the process returns to step 906 where the image frame is scaled according to the new scale factor and the processing continues from there. If all scale factors have been applied to the image frame then the one session of first type of window based object detection has been performed, step 928, and the process returns to the process of Fig 8 and to checking if any object detection is to be performed.

Now referring to Figs 10a-b, one embodiment of the second type of window based object detection 1000, which corresponds to step 810 in Fig 8, is described. This process 1000 starts by setting or resetting the object detection scheme. This may be performed by retrieving the boundary within the window positions are to be varied, step 1001, and then setting initial search window coordinates wx, wy, to representing a start position for the search window within the present detection boundary, step 1002. The start coordinates wx, wy may for instance be the top left corner of the detection boundary. A further initial setting may be to set an image scale factor to an initial scale value s₂, step 1004. Then the image frame is scaled a factor s₂, step 1006, and an integral image is computed based on the scaled image of the present image frame, 1008. A search window is positioned at wx, wy, in the image frame, step 1010, and the area of the search window is processed by means of, for example, a cascading classifier method in accordance with the previously mentioned method of Paul Viola and Michael Jones, step 1012. The search window processing of step 1012 is repeated until the search window is identified as not including an object or until the cascading classifier method has finished, step 1013, without identifying that the search window does not include an object. The processing of the search window may alternatively be performed using any other method known to the person skilled in the art or previously mentioned in this specification.

If the processing of the search window, step 1012, returns the result that the search window is likely to include an object, step 1014, then the presently used search window position, wx, wy, and scale factor s₂ is registered as at least part of the result of the first type of search window based object detection, step 1015. Then the process continues to step 1016. If the processing of the search window presents that the search window does not include an object to be detected, the process continues directly to step 1016.

In steps 1016, 1018, 1020 and 1022 the search window is moved and then the process is returned to step 910 in order to start a new search window processing at the new search window position. The process of moving the search window according to the depicted process includes checking if the present position is the last window in an x-direction, step 1016. If this is false then the x-position wx is incremented by a distance value Δxₛ₂, step 1018, and the process returns to step 1010 in order to process the new search window position. However, if the search window position is the last window position in an x-direction, step 1016, then the process continues to step 1020 to check if the present search window position represents the last row of search windows, i.e. is the last window in a y-direction. lf this statement is false the search window is to restart at the beginning of a new row, i.e. wx is set to the value for a start position and wy is incremented by a distance value Δyₛ₂, step 1022. For example wx=leftmost position of detection boundary and wy=wy+ Δyₛ₂.

If the last search window has been processed the process continues to step 1024 in which a check of whether all intended different scale factors has been applied to the image frame. If not all the different scale factors have been applied to the image frame then the scale factor s₂ is set to the next scale value in the predetermined range of scale factors, step 1026, and the process returns to step 1006 where the image frame is scaled according to the new scale factor and the processing continues from there. If all scale factors have been applied to the image frame then the process check if there are further search boundaries to process, step 1027. If there are further search boundaries to process the process returns to step 1001. If there are no further search boundaries to process this session of second type of window based object detection has been performed, step 1028, then the process returns to the process of Fig 8. In the process of Fig 8 the process continues to check if any object detection is to be performed.

ln the process described above referring to Figs 8, 9a-b, and 10a-b, the scaling of the image frame between scans of the detection areas respectively is performed in order to enable detection of objects even if the objects are of different size. However, this may be accomplished by scaling the search windows instead of scaling the image frame.

## Claims

1. Method for detecting objects in moving images, comprising:
A) receiving video including a sequence of image frames,
B) performing a first type of window based object detection on substantially an entire image frame (100) captured once every t₁ seconds, said first type of window based object detection including:
positioning a plurality of search windows (102) within the image frame (100), which in combination cover substantially the entire image frame (100), the distance between two neighbouring search windows (102) being Δxₛ₁ in a first direction within the image frame (100),
determining if an object (108) is present in a search window (102) by comparing data representing the area of the image frame being defined by said search window (102) with a model based on features representing an object to detect, and
setting a detection boundary (210) enclosing a subarea of the image frame including a search window (102) in which an object (108) has been detected,
C) performing a second type of window based object detection in an image frame (200) captured after the capturing of an image frame in which an object (108) has been detected, said second type of window based object detection including:
positioning a plurality of search windows (202) only within said detection boundary (210) in the image frame (200) captured after the capturing of an image frame (100) in which an object (108) has been detected, the distance between two neighbouring search windows (202) being Δxₛ₂ in a first direction within the image frame, Δxₛ₂ is smaller than Δxₛ₁, and
determining if an object (208) is present in a search window (202) by comparing data representing the area of the image frame being defined by said search window (202) with a model representing an object to detect.

2. Method according to claim 1, wherein the performing of a second type of window search based object detection further includes resetting a detection boundary (210) to a detection boundary enclosing a sub area of the image frame including a search window (202) in which an object (208) has been detected by the second type of window search based object detection, and
further comprising performing an additional second type of window search based object detection in an image frame captured later than the image frame (200) of the previously performed second type of window search based object detection and using the reset detection boundary.

3. Method according to any one of claims 1-2, wherein the data representing the area of the search window (102; 202) is the image data of said area.

4. Method according to any one of claims 1-2, wherein the data representing the area of the search window (102; 202) is the image data of said area from an integral image of the captured image.

5. Method according to any one of claims 1-3, wherein said model is based on features of the object to detect.

6. Method according to claim 5, wherein said comparing data representing the area of the search window with a model including said features in the form of a scheme of cascading classifiers.

7. Method according to any one of claims 1-4, wherein said comparing data representing the area of the search window (102; 202) with a model being an image.

8. Method according to any one of claims 1-7, wherein Δxₛ₁ is at least half the width of the width of the search windows (102).

9. Method according to any one of claims 1-8, wherein Δxₛ₁ is at least twice as large as Δxₛ₂.

10. Object detecting apparatus comprising:
an image frame data input arranged to receive a representation of an image frame (100; 200) being part of a video sequence,
a search window controller (42) arranged to position a plurality of search windows (102; 202) within the image frame (100; 200), and
a classifying means (44) arranged to process image data within a search window (102; 202) by comparing it to data of a classification model and thereby decide whether a search window (102; 202) includes an object (108; 208) or not,
**characterised by**:
a detection boundary generator arranged to generate a detection boundary (210) based on the size and position of a search window classified as including an object, wherein the detection boundary (210) is larger than the search window classified as including an object but smaller than the image frame (100; 200),
said search window controller (42) being arranged to position during a first type of window based object detection a plurality of search windows (102) within the image frame (100), which in combination cover substantially the entire image frame (100), and to position during a second type of window based object detection a plurality of search windows (202) only within a detection boundary (210), wherein the distance between two neighbouring search windows (102) during the first type of window based object detection is Δxₛ₁ in a first direction within the image frame (100) and wherein the distance between two neighbouring search windows (202) during the second type of window based object detection is Δxₛ₂ in a first direction within the image frame (200), Δxₛ₂ being smaller than Δxₛ₁,

11. Object detecting apparatus according to claim 10, wherein the image frame data input is arranged to receive an integral image of a captured image.

12. Object detecting apparatus according to claim 10, further comprising an image integrator (48) arranged to integrate image data received via the image frame data input.

13. Object detecting apparatus according to any one of claims 10-12, wherein the classifying means is arranged to operate on models based on cascading classifiers.

14. Object detecting apparatus according to any one of claims 10-13, further comprising a register for registering detected objects.
